# EUROPÄISCHE PATENTSCHRIFT

(11) **EP 1 609 680 B1**
(45) Veröffentlichungstag und Bekanntmachung des Hinweises auf die Patenterteilung: **20.06.2007**
(21) Anmeldenummer: 04102978.6
(22) Anmeldetag: 25.06.2004
(51) Int. Cl.: B60R 13/02, B60K 37/00, B32B 27/12

(54) **Verkleidungselement für ein Fahrzeug**
Vehicle liner
Garniture de vehicule

(43) Veröffentlichungstag der Anmeldung: 28.12.2005
(73) Patentinhaber: Ford Global Technologies, LLC, Dearborn, MI 48126 (US)
(72) Erfinder: Herrmann, Michael, 51375, Leverkusen (DE); Lichi, Kai-Uwe, 51069, Köln (DE)
(74) Vertreter: Dörfler, Thomas

(56) Entgegenhaltungen:
- EP-A- 0 995 667
- EP-A- 1 312 468
- WO-A-01/03927
- WO-A-94/26994
- WO-A-03/047907
- DE-A- 19 801 985
- DE-U- 29 808 949
- US-A- 5 385 774

## Beschreibung

Die Erfindung betrifft ein Verkleidungselement für ein Fahrzeug, insbesondere ein Kraftfahrzeug mit mindestens zwei Schichten.

Solche Verkleidungselemente dienen meist zur Abdeckung und Gestaltung des Innenraumes von Fahrzeugen, wie dies beispielsweise in Kraftfahrzeugsektor beim Armaturenbrett der Fall ist. Andererseits können solche Verkleidungselemente auch Teile der Außenhaut der Fahrzeuge, z. B. Karosserie sein oder an deren Außenseite angebracht sein.

Die Verkleidungselemente müssen, um technisch und wirtschaftlich einsetzbar zu sein, bestimmte Anforderungen erfüllen. Hierzu gehört neben einem geringen Gewicht auch eine hohe Steifigkeit.

Die Verkleidungselemente müssen aber zusätzlich auch ansprechend gestaltbar sein, um die Insassen bzw. Kunden anzusprechen. Hierzu werden die Verkleidungselemente nicht nur farbig ausgeführt, sondern zum Beispiel auch mit einer strukturierten Oberfläche, einem Holz-, Metall- oder Carbonfaser-Dekor versehen. So ist es bekannt die Verkleidungselemente mit Metallleisten zu verzieren. Hochwertig anmutende Oberflächen bzw. Verkleidungen sind wesentliche Entscheidungs- bzw. Kaufkriterien für die Insassen bzw. Kunden.

Aus der gattungsbildenden WO 01/03927 ist ein Dekoraufbau für ein Verkleidungselement für den Fahrzeuginnenraum bekannt, bei dem eine äußere Dekorschicht aus einem textilen Material besteht, wobei als Material insbesondere ein synthetisches Fasermaterial vorgesehen ist. Diese äußere Dekorschicht wird über eine Zwischenschicht aus synthetischem Latex, Acrylharz oder einem thermoplastischen Elastomer mit einer flexiblen Basisschicht verbunden, die wiederum mit dem formgebenden Trägerteil aus gespritztem Kunststoff verbunden ist. Eine derartige textile Dekorschicht schafft nur bedingt eine hochwertig anmutende und zugleich hochfeste Oberfläche.

Aus der WO 94/13497 A1 bzw. DE 93 21214 U1 sind Elemente bekannt, die aus einer dünnen Fasermateriallage und einer Transparentschicht bestehen, wobei die Fasermateriallage entweder in der transparenten Schicht eingebettet oder von dieser ausgefüllt ist, sodass auf der dem Betrachter zugewandten Seite die Fasermateriallage immer von einer transparenten Deckschicht mit glatter Oberfläche abgedeckt ist. Diese Elemente sind jedoch nur zur Verzierung gedacht und daher entsprechend strukturell schwach ausgebildet, da sie auf Oberflächen von Verkleidungen aufgebracht werden und diese nicht selbst ausbilden.

Hiervon ausgehend ist es Aufgabe der Erfindung ein Verkleidungselement für Fahrzeuge, insbesondere Kraftfahrzeuge bereitzustellen, das möglichst leicht und trotzdem stabil und steif ist. Daneben soll es eine besonders hochwertig anmutende Oberfläche aufweisen. Insbesondere soll es die Insassen bzw. Benutzer nicht nur optisch ansprechen.

Diese Aufgabe wird durch das in Anspruch 1 wiedergegebene Verkleidungselement für ein Fahrzeug, insbesondere ein Kraftfahrzeug gelöst.

Erfindungsgemäß weist das Verkleidungselement für ein Fahrzeug, insbesondere ein Kraftfahrzeug, mindestens zwei Schichten auf:
i) eine erste äußere Schicht, die im Wesentlichen aus einem Fasergewebe besteht, dessen strukturierte Oberfläche frei liegt, und
ii) eine zweite, hinter der ersten Schicht liegende Schicht, die im Wesentlichen aus einem Kunststoff besteht.

Das Fasergewebe der ersten Schicht ist ein Metallfasergewebe. Insbesondere ist das Fasergewebe der ersten Schicht ein Metalldrahtgewebe. Hiermit sind besonders steife und trotzdem stabile und leichte Verkleidungselemente möglich.

Durch den erfindungsgemäßen Zweischichtaufbau des Verkleidungselements mit einem Fasergewebe und einem Kunststoff können neuartige Verkleidungselemente bereitgestellt werden, die ein geringes Gewicht bei hoher Steifigkeit aufweisen. Der Aufbau ermöglicht es nämlich durch geeignete Auswahl des Gewebes und des Kunststoffs die Eigenschaften des Verkleidungselements gezielt maßzuschneidern. So können die gewünschte Steife bzw. Flexibilität, Gewicht und andere notwendige Eigenschaften wie z. B. Brandschutz oder Kratzbeständigkeit je nach Verwendungszweck eingestellt werden. Durch die hohe Steifigkeit bei geringem Gewicht kann z. B. ohne strukturelle Kompromisse einzugehen Kraftstoff gespart werden.

Zusätzlich besitzen die Verkleidungselemente nicht nur eine optisch ansprechende Oberfläche, sondern durch die freiliegende strukturierte Oberfläche des Fasergewebes auch eine neuartige, haptisch interessante Oberfläche.

Vorzugsweise werden diese Verkleidungselemente für den Innenraum von Fahrzeugen, insbesondere Personenkraftwagen verwendet. Sie können ganze Bereiche des Innenraums, wie das Armaturenbrett oder die Mittelkonsole, oder auch nur kleinere Abschnitte, wie Fensterumrandungen verkleiden. Auch der Einsatz als Griff-Verkleidungen z. B. der Türen usw. ist denkbar.

Die strukturierte Oberfläche der ersten äußeren Schicht aus Fasergewebe ist erfindungsgemäß dem Benutzer oder Insassen zugewandt und nicht bedeckt. Die durch das gewebte Fasermaterial gebildete strukturierte Oberfläche der ersten äußeren Schicht ist somit für Berührungen frei d. h. liegt frei. Weder der Kunststoff der zweiten Schicht noch eine separate Deckschicht (z. B. Clearcoat) bedeckt die strukturierte Oberfläche.

Der Kunststoff der zweiten Schicht benetzt höchstens die Rückseite des Fasergewebes, um so eine feste Verbindung zwischen den Schichten zu erzeugen.

In einer Ausführungsform der Erfindung ist zwischen der ersten Schicht und der zweiten Schicht eine Schutzfolie angeordnet. Die Schutzfolie verhindert einen Eintritt von Kunststoff der zweiten Schicht in das Fasergewebe der ersten Schicht. Somit wird die Wahl des Gewebes bzw. des Kunststoffs nicht durch die Gefahr einer Bedeckung der strukturierten Oberfläche eingeschränkt. Somit können für das Fasergewebe auch grobmaschige Gewebe und für die zweite Schicht dünnflüssige Kunststoffe verwendet werden.

In einer weiteren Ausführungsform der Erfindung kann zusätzlich zur Schutzfolie oder an deren Stelle zwischen der ersten Schicht und der zweiten Schicht eine Trägerschicht angeordnet sein. Die Trägerschicht verhindert auch einen Eintritt des Kunststoffs der zweiten Schicht in das Fasergewebe der ersten Schicht. Zusätzlich ermöglicht sie die Eigenschaften des Verkleidungselements weiter maßzuschneidern. So kann durch den "Sandwich" Effekt die strukturelle Stärke bzw. Steife des Verkleidungselements erhöht werden oder weitere Eigenschaften bereitgestellt werden, wie z. B. verbesserten Brand- oder Schallschutz.

Ist zwischen der ersten Schicht und der zweiten Schicht sowohl eine Schutzfolie als auch eine Trägerschicht angeordnet, so grenzt vorzugsweise die Trägerschicht an die erste Schicht und die Schutzfolie an die zweite Schicht.

Die Schutzfolie und/oder Trägerschicht werden in geeigneter Weise auf die Rückseite des Fasergewebes bzw. aufeinander aufgeklebt oder auflaminiert.

Vorzugsweise weisen die Fasern des Fasergewebes der ersten Schicht eine glatte Oberfläche auf. Somit wird eine besonders angenehme Haptik der strukturierten Oberfläche erreicht. Es können sowohl fein- als auch grobmaschige Gewebe eingesetzt werden.

Die Fasern des Fasergewebes können aus vielen verschiedenen Materialien, die auch noch verschieden oder unterschiedlich gefärbt sind, hergestellt sein. So sind neben Metallfasern oder Drähten auch Kunststofffasern einsetzbar. Die Fasern eines Gewebes können auch aus verschiedenen Materialien gemischt sein, z.B. Metall und Kunststoff. Oder es werden zwei Gewebe hintereinander appliziert, wobei oben z.B. ein Metallfasergewebe und unten ein Kunststoffgewebe angeordnet ist. In allen Fällen können Fasern dabei der besseren Anbindung an die Schutzfolie bzw. die Kunststoffschicht dienen.

Die Metallfasern des Fasergewebes der ersten Schicht können aus jedem geeigneten Metall, insbesondere aus Eisen, seinen Legierungen oder Nichteisenmetallen oder Kombinationen der zuvor genannten bestehen.

Vorzugsweise wird Stahl, Edelstahl, Aluminium oder eine Aluminiumlegierung verwendet. Diese ergeben eine besonders erstrebenswerte Optik und interessante Haptik der freiliegenden Oberfläche.

Besonders bevorzugt ist der Einsatz von Draht mit blanker Oberfläche. Insbesondere sollte Draht Verwendung finden, dessen Oberfläche nicht zur Veränderung z. B. durch Korrosion neigt. So kann die Oberfläche der einzelnen Fasern gezielt behandelt bzw. beschichtet sein.

Das Fasergewebe der ersten Schicht kann je nach Verwendungszweck geeignete Dicken, Flächengewichte oder Faserdurchmesser aufweisen. So kann die Dicke unterhalb eines Millimeters (z. B. 0,5 bis 0,9 mm) liegen oder mehrere Millimeter (z. B. 2 bis 15 mm) betragen.

Der Kunststoff der zweiten Schicht kann ebenfalls je nach gewünschter Eigenschaft und des geplanten Verwendungszwecks des Verkleidungselements aus einer Vielzahl von Kunststoffen ausgewählt werden. Insbesondere ist dabei die Art der Herstellung des Verkleidungselements zu berücksichtigen.

Bevorzugterweise wird das Verkleidungselement im Spritzgussverfahren hergestellt, sodass der Kunststoff der zweiten Schicht aus einem spritzgussfähigen Kunststoff besteht.

Insbesondere wird der spritzgussfähige Kunststoff der zweiten Schicht aus einem oder mehreren spritzgussfähigen Kunststoffen aus der Gruppe bestehend aus Polystyrol, Polyamide, Polyurethane, Celluloseether und -ester, Polyethylen, Poly(methyl)(meth)acrylsäure und -ester, Kautschuk oder Siliconkautschuk, Polyphthalat-Harze, Epoxid-Harze, Aminoplaste, Polyolefine, Vinylpolymere, Polyester, ungesättigte Polyester, Polyacetale, Polycarbonate oder Copolymerisaten der zuvor genannten ausgewählt. Besonders bevorzugt ist der Einsatz von ABS (Acrylnitril-Butadien-Styrol).

Die Herstellung des Verkleidungselements ist jedoch nicht auf das Spritzgussverfahren beschränkt. Auch eine Herstellung mittels Warmpressen, Gießen usw. ist denkbar.

Die Verkleidungselemente können zur Ergänzung bzw. Verbesserung Ihrer optischen Erscheinung ein Fasergewebe in der ersten Schicht umfassen, das aus zwei oder mehreren Fasersorten besteht, z. B. zusätzlich mit lichtleitenden Fasern versehen ist. So können insbesondere bei Nacht interessante Effekte erzielt werden. Selbstverständlich können zur Beleuchtung Lichtquellen unterschiedlicher Farbe Verwendung finden.

Auch können die unterschiedlichen Fasern in Mustern oder nur Bereichsweise in den Verkleidungselementen bzw. dem Fasergewebe der ersten Schicht vorgesehen sein. So könnten durch gezielte Einbringung von lichtleitenden Fasern in ein als Armaturenbrett verwendetes Verkleidungselement die Anzeigen beleuchtet werden.

Die zweite Schicht kann transparent und/oder farbig ausgestaltet sein, so dass der optische Eindruck der Verkleidungselemente weiter variierbar ist. Eine solche Ausgestaltung bietet sich insbesondere bei der Verwendung von grobmaschigen Fasergeweben an, da dann die zweite Schicht "durchscheint". Bei transparenter zweiter Schicht kann das Verkleidungselement z. B. von Hinten be- bzw. durchleuchtet werden.

Zur Herstellung eines Verkleidungselements nach der Erfindung kann beispielsweise folgendermaßen vorgegangen werden:
i) Ausstanzen des Fasergewebes aus einer Matte,
ii) Vorformen des Verkleidungselements aus dem Stanzling,
iii) ggf. Bearbeiten des Stanzlings,
iv) ggf. Aufbringen einer Schutzfolie auf die Rückseite des Stanzlings,
v) ggf. Aufbringen einer Trägerschicht auf die Rückseite des Stanzlings und
vi) Ausbildung der zweiten Schicht durch Hinterfüllen des Stanzlings mit einem spritzgussfähigen Material.

Bei einem solchen Vorgehen kann der Stanzling, d. h. das Fasergewebe der ersten Schicht mittels Vakuum oder bei magnetischen Fasern mittels Magnete fest gehalten bzw. positioniert werden, so dass keine Ausrichtungsfehler auftreten.

Weitere Merkmale, Eigenschaften und Vorteile der Erfindung ergeben sich aus der nachfolgenden Beschreibung der Zeichnung. Es zeigen:
- Fig. 1: einen Stanzling aus Fasergewebe zur Herstellung eines erfindungsgemäßen Verkleidungselements in einer perspektivischen Ansicht;
- Fig. 2: den Stanzling aus Fig. 1 nach seiner Bearbeitung in einer perspektivischen Ansicht;
- Fig.3: den Stanzling aus Fig. 1 nach weiterer Bearbeitung in einer perspektivischen Ansicht;
- Fig. 4a: einen Querschnitt durch einen Bereich des Stanzlings aus Fig. 3 nach Aufbringen einer Schutzfolie;
- Fig. 4b: einen Querschnitt durch einen Bereich des Stanzlings aus Fig. 3 nach Aufbringen einer Trägerschicht;
- Fig. 5: einen Querschnitt durch einen Bereich des Stanzlings aus Fig. 4a bzw. 4b nach Aufbringen der zweiten Schicht.
- Fig. 6: eine perspektivische Ansicht eines Ausschnitts einer weiteren Ausführungsform eines erfindungsgemäßen Verkleidungselements mit einer transparenten zweiten Schicht.

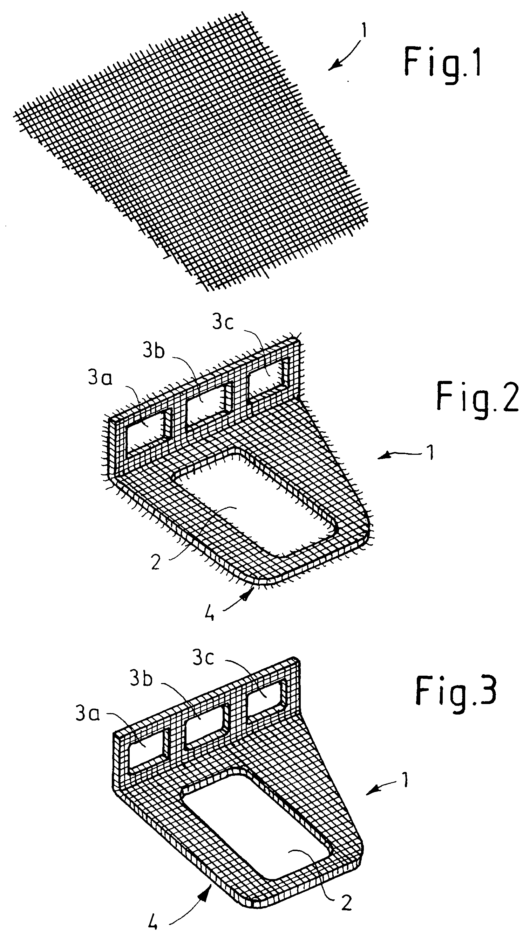

Figuren 1 bis 3 verdeutlichen die Schritte der Herstellung einer ersten äußeren Schicht aus Fasergewebe eines Verkleidungselements für den Bereich eines Getriebeschalthebels.

Fig. 1 zeigt einen Stanzling 1 etwa trapezförmiger Gestalt aus engmaschigem Fasergewebe, dessen Fasern aus dünnem Edelstahldraht mit glatter, polierter Oberfläche bestehen, der die erste äußere Schicht bildet. Er wird in einem ersten Schritt aus einer größeren Matte Fasergewebe ausgeschnitten und weist die groben Umrisse des späteren Verkleidungselements auf.

Der Stanzling 1 wird im zweiten Schritt mit einer großen etwa rechteckigen Ausnehmung 2 für den Getriebewahlhebel und drei kleineren gleichgroßen rechteckigen Ausnehmungen 3a, 3b, 3c für Anzeigeelemente oder Ähnliches versehen. Die Ausnehmungen 3a, 3b, 3c sind entlang einer Linie fluchtend ausgerichtet.

Die Ausnehmungen können ebenfalls durch Stanzen oder Schneiden hergestellt werden. Die Ausnehmungen könnten bei geeignetem Stanzwerkzeug ebenfalls im ersten Schritt ausgestanzt werden.

Anschließend wird der flexible, aber knick-steife Fasergewebestanzling 1 im Bereich zwischen den Ausnehmungen 3a, 3b, 3c und der größeren Ausnehmung 2 um etwa 90° nach oben gebogen (vgl. Fig. 2).

Zur Fertigstellung der ersten äußeren Schicht werden die Schnittkanten 4 des Stanzlings nachbearbeitet, so dass keine "ausgefransten" scharfen bzw. spitzen Kanten vorhanden sind und glatte Ränder entstehen (vgl. Fig. 3).

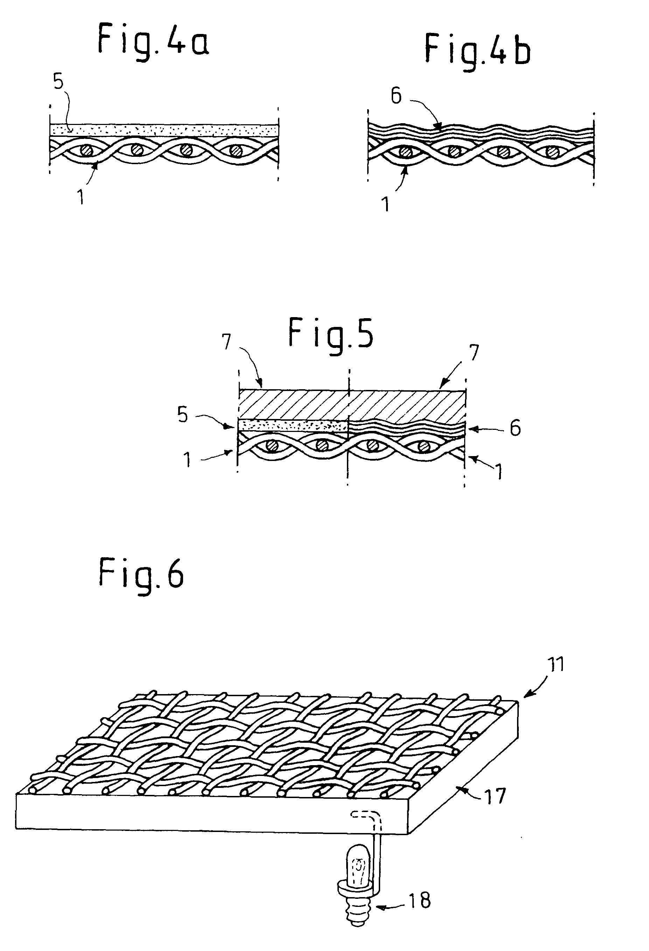

Zur Vorbereitung des Stanzlings 1 zum Aufbringen der zweiten Schicht aus Kunststoff, wird eine Schutzfolie 5 (vgl. Fig. 4a) oder eine Trägerschicht 6 (vgl. Fig. 4b) auf die Rückseite des Stanzlings 1 aufgebracht. Sowohl die Schutzfolie 5 als auch die Trägerschicht 6 verhindern einen Eintritt des fließfähigen Kunststoffs in das Edelstahlgewebe bei der Herstellung der zweiten Schicht. Die Verbindung zwischen der Schutzfolie 5 bzw. Trägerschicht 6 und der Rückseite des Stanzlings 1 wird durch Kleben bzw. Laminieren hergestellt.

Anschließend wird zur Ausbildung der zweiten Schicht 7 hinter der ersten Schicht 1 bzw. auf die Rückseite des Stanzlings 1 flüssiges, bevorzugt schwarzgefärbtes, ABS im Spritzgussverfahren aufgebracht und ausgehärtet. Je nach gewünschtem Farbeffekt kann das ABS jede Farbe aufweisen. Es resultiert ein Aufbau des Verkleidungselements, wie er aus Figur 5 hervorgeht. Auf der linken Seite der Figur ist der Aufbau mit Schutzfolie und auf der rechten Seite der Aufbau mit Trägerschicht dargestellt.

Eine weitere Ausführungsform des Aufbaus einer Verkleidung ist in Figur 6 dargestellt.

Sie unterscheidet sich von dem zuvor beschriebenen Aufbau dadurch, dass der Stanzling 11 aus einem grobmaschigen Metalldrahtgewebe besteht und dass der Kunststoff der zweiten Schicht 17 transparent ist. Ferner wurde weder eine Schutzfolie noch eine Trägerschicht verwendet.

Hinter der transparenten zweiten Schicht 17 ist eine Beleuchtungsvorrichtung 18 angeordnet. Diese kann z. B. eine Glühbirne umfassen. Das von der Beleuchtungsvorrichtung 18 abgegebene Licht scheint durch die transparente zweite Schicht 17 durch und beleuchtet das grobmaschige Metalldrahtgewebe der ersten Schicht von Hinten. Zusätzlich durchdringt das Licht das grobmaschige Metalldrahtgeflecht und kann zur Beleuchtung von Anzeigen, Instrumenten usw. oder der Erzeugung von Effekten verwendet werden.

Um den hinterleuchteten Bereich zu begrenzen, kann entweder die Transparenz der zweiten Schicht örtlich begrenzt sein. Alternativ kann die Lichtquelle z. B. durch Einsatz eines Mantels derart fokussiert sein, das ihr Licht nur örtlich begrenzt auf die zweite Schicht trifft.

## Patentansprüche

1. Verkleidungselement für ein Fahrzeug, insbesondere ein Kraftfahrzeug, mit mindestens zwei Schichten:
i) einer ersten äußeren Schicht (1, 11), die im Wesentlichen aus einem Fasergewebe besteht, dessen strukturierte Oberfläche frei liegt, und
ii) einer zweiten, hinter der ersten Schicht (1) liegenden Schicht (7, 17), die im Wesentlichen aus einem Kunststoff besteht,
**dadurch gekennzeichnet, dass**
das Fasergewebe der ersten Schicht (1, 11) ein Metallfasergewebe ist.

2. Verkleidungselement nach Anspruch 1,
**dadurch gekennzeichnet, dass**
zwischen der ersten Schicht (1, 11) und der zweiten Schicht (7, 17) eine Schutzfolie (5) angeordnet ist.

3. Verkleidungselement nach Anspruch 1 oder 2,
**dadurch gekennzeichnet, dass**
zwischen der ersten Schicht (1, 11) und der zweiten Schicht (7, 17) eine Trägerschicht (6) angeordnet ist.

4. Verkleidungselement nach Anspruch 3,
**dadurch gekennzeichnet, dass**
zwischen der ersten Schicht (1, 11) und der zweiten Schicht (7, 17) die Schutzfolie (5) und die Trägerschicht (6) angeordnet sind, wobei die Trägerschicht (6) an die erste Schicht (1, 11) angrenzt und die Schutzfolie (5) an die zweite Schicht (7, 17) angrenzt.

5. Verkleidungselement nach einem der vorhergehenden Ansprüche,
**dadurch gekennzeichnet, dass**
die zweite Schicht (7, 17) transparent und/oder farbig ist.

6. Verkleidungselement nach einem der vorhergehenden Ansprüche,
**dadurch gekennzeichnet, dass**
das Fasergewebe der ersten Schicht (1, 11) mit lichtleitenden Fasern versehen ist.

7. Verkleidungselement nach einem der vorhergehenden Ansprüche,
**dadurch gekennzeichnet, dass**
die Fasern des Fasergewebes der ersten Schicht (1, 11) eine glatte Oberfläche aufweisen.

8. Verkleidungselement nach einem der vorhergehenden Ansprüche,
**dadurch gekennzeichnet, dass**
das Fasergewebe der ersten Schicht (1, 11) ein Metalldrahtgewebe ist.

9. Verkleidungselement nach einem der vorhergehenden Ansprüche,
**dadurch gekennzeichnet, dass**
das Fasergewebe der ersten Schicht (1, 11) aus Eisen, seinen Legierungen oder Nichteisenmetallen oder Kombinationen der zuvor genannten besteht.

10. Verkleidungselement nach Anspruch 9,
**dadurch gekennzeichnet, dass**
das Fasergewebe der ersten Schicht (1, 11) aus Stahl, Edelstahl, Aluminium oder einer Aluminiumlegierung besteht.

11. Verkleidungselement nach einem der vorhergehenden Ansprüche,
**dadurch gekennzeichnet, dass**
das Fasergewebe der ersten Schicht (1, 11) Metall- und Kunststofffasern bzw- -drähte enthält.

12. Verkleidungselement nach einem der vorhergehenden Ansprüche,
**dadurch gekennzeichnet, dass**
der Kunststoff der zweiten Schicht (7, 17) aus einem spritzgussfähigen Kunststoff besteht.

13. Verkleidungselement nach Anspruch 12,
**dadurch gekennzeichnet, dass**
der spritzgussfähige Kunststoff der zweiten Schicht (7, 17) aus einem oder mehreren Kunststoffen aus der Gruppe bestehend aus Polystyrol, Polyamide, Polyurethane, Celluloseether und -ester, Polyethylen, Poly(methyl)(meth)acrylsäure und -ester, Kautschuk oder Siliconkautschuk, Polyphthalat-Harze, Epoxid-Harze, Aminoplaste, Polyolefine, Vinylpolymere, Polyester, ungesättigte Polyester, Polyacetale, Polycarbonate oder Copolymerisaten der zuvor genannten ausgewählt ist.

14. Verkleidungselement nach Anspruch 12 oder 13,
**dadurch gekennzeichnet, dass**
der spritzgussfähige Kunststoff der zweiten Schicht (7, 17) ABS (Acrylnitril-Butadien-Styrol) umfasst.

## Claims

1. Cladding element for a vehicle, in particular a motor vehicle, with at least two layers:
i) a first external layer (1, 11), which is in essence composed of a fiber textile, whose structured surface is uncovered, and
ii) a second layer (7, 17) situated behind the first layer (1) and in essence composed of a plastic,
**characterized in that**
the fiber textile of the first layer (1, 11) is a metal fiber textile.

2. Cladding element according to Claim 1,
**characterized in that**
a protective foil (5) has been arranged between the first layer (1, 11) and the second layer (7, 17).

3. Cladding element according to Claim 1 or 2,
**characterized in that**
a support layer (6) has been arranged between the first layer (1, 11) and the second layer (7, 17).

4. Cladding element according to Claim 3,
**characterized in that**
the protective foil (5) and the support layer (6) have been arranged between the first layer (1, 11) and the second layer (7, 17), and the support layer (6) here is adjacent to the first layer (1, 11), and the protective foil (5) here is adjacent to the second layer (7, 17).

5. Cladding element according to any of the preceding claims,
**characterized in that**
the second layer (7, 17) is transparent and/or colored.

6. Cladding element according to any of the preceding claims,
**characterized in that**
the fiber textile of the first layer (1, 11) has been provided with optically conducting fibers.

7. Cladding element according to any of the preceding claims,
**characterized in that**
the fibers of the fiber textile of the first layer (1, 11) have a smooth surface.

8. Cladding element according to any of the preceding claims,
**characterized in that**
the fiber textile of the first layer (1, 11) is a metal wire textile.

9. Cladding element according to any of the preceding claims,
**characterized in that**
the fiber textile of the first layer (1, 11) is composed of iron, of its alloys, or of metals other than iron, or of a combination of the above.

10. Cladding element according to Claim 9,
**characterized in that**
the fiber textile of the first layer (1, 11) is composed of steel, of high-specification steel, of aluminium, or of an aluminium alloy.

11. Cladding element according to any of the preceding claims,
**characterized in that**
the fiber textile of the first layer (1, 11) comprises fibers or wires, these being composed of metal or of plastic.

12. Cladding element according to any of the preceding claims,
**characterized in that**
the plastic of the second layer (7, 17) is composed of an injection-moldable plastic.

13. Cladding element according to Claim 12,
**characterized in that**
the injection-moldable plastic of the second layer (7, 17) has been selected from one or more plastics from the group consisting of polystyrene, polyamides, polyurethanes, cellulose ethers, cellulose esters, polyethylene, poly(methyl)-(meth)acrylic acid and its esters, rubber, or silicone rubber, polyphthalate resins, epoxy resins, aminoplastics, polyolefins, vinyl polymers, polyesters, unsaturated polyesters, polyacetals, polycarbonates, or copolymers of the above.

14. Cladding element according to Claim 12 or 13,
**characterized in that**
the injection-moldable plastic of the second layer (7, 17) encompasses ABS (acrylonitrile-butadienestyrene).

## Revendications

1. Elément d'habillage pour un véhicule, notamment un véhicule automobile, comprenant au moins deux couches :
i) une première couche extérieure (1, 11) qui se compose essentiellement d'un tissu de fibres, dont la surface structurée est exposée, et
ii) une deuxième couche (7, 17) située derrière la première couche (1), qui se compose essentiellement d'un plastique,
**caractérisé en ce que**
le tissu de fibres de la première couche (1, 11) est un tissu de fibres métalliques.

2. Elément d'habillage selon la revendication 1,
**caractérisé en ce que**
l'on dispose une feuille de protection (5) entre la première couche (1, 11) et la deuxième couche (7, 17).

3. Elément d'habillage selon la revendication 1 ou 2,
**caractérisé en ce que**
l'on dispose une couche porteuse (6) entre la première couche (1, 11) et la deuxième couche (7, 17) .

4. Elément d'habillage selon la revendication 3,
**caractérisé en ce que**
la feuille de protection (5) et la feuille porteuse (6) sont disposées entre la première couche (1, 11) et la deuxième couche (7, 17), la couche porteuse (6) étant contre la première couche (1, 11) et la couche de protection (5) contre la deuxième couche (7, 17).

5. Elément d'habillage selon l'une quelconque des revendications précédentes,
**caractérisé en ce que**
la deuxième couche (7, 17) est transparente et/ou colorée.

6. Elément d'habillage selon l'une quelconque des revendications précédentes,
**caractérisé en ce que**
le tissu de fibres de la première couche (1, 11) est pourvu de fibres guidant la lumière.

7. Elément d'habillage selon l'une quelconque des revendications précédentes,
**caractérisé en ce que**
les fibres du tissu de fibres de la première couche (1, 11) présentent une surface lisse.

8. Elément d'habillage selon l'une quelconque des revendications précédentes,
**caractérisé en ce que**
le tissu de fibres de la première couche (1, 11) est un tissu de fils métalliques.

9. Elément d'habillage selon l'une quelconque des revendications précédentes,
**caractérisé en ce que**
le tissu de fibres de la première couche (1, 11) se compose de fer, de ses alliages ou de métaux non ferreux ou de combinaisons de ceux-ci.

10. Elément d'habillage selon la revendication 9,
**caractérisé en ce que**
le tissu de fibres de la première couche (1, 11) se compose d'acier, d'acier spécial, d'aluminium ou d'un alliage d'aluminium.

11. Elément d'habillage selon l'une quelconque des revendications précédentes,
**caractérisé en ce que**
le tissu de fibres de la première couche (1, 11) contient des fibres ou des fils métalliques et plastiques.

12. Elément d'habillage selon l'une quelconque des revendications précédentes,
**caractérisé en ce que**
le plastique de la deuxième couche (7, 17) se compose d'un plastique moulable par injection.

13. Elément d'habillage selon la revendication 12,
**caractérisé en ce que**
le plastique moulable par injection de la deuxième couche (7, 17) est choisi parmi un ou plusieurs plastiques du groupe constitué du polystyrène, des polyamides, des polyuréthannes, des éthers et esters cellulosiques, du polyéthylène, de l'acide poly(méthyl)(méth)acrylique, et du poly(méthyl)(méth)acrylate, du caoutchouc ou du caoutchouc siliconé, des résines de polyphtalate, des résines époxy, des aminoplastes, des polyoléfines, des polymères vinyliques, des polyesters, des polyesters insaturés, des polyacétals, des polycarbonates ou des copolymérisats des composés susmentionnés.

14. Elément d'habillage selon la revendication 12 ou 13,
**caractérisé en ce que**
le plastique moulable par injection de la deuxième couche (7, 17) comprend de l'ABS (acrylonitrile-butadiène-styrène).
